# EUROPÄISCHE PATENTSCHRIFT

(11) **EP 0 582 045 B1**
(45) Veröffentlichungstag und Bekanntmachung des Hinweises auf die Patenterteilung: **24.06.1998**
(21) Anmeldenummer: 93107547.7
(22) Anmeldetag: 10.05.1993
(51) Int. Cl.: G01N 27/00, G01N 33/00

(54) **Verfahren zur Herstellung einer Vorrichtung zur Messung einer Gasdichte und danach hergestellte Vorrichtungen**
Method for producing an apparatus for measuring the concentration of a gas and apparatus obtained thereby
Procédé de production d'un appareil pour la mesure de la concentration d'un gaz et appareil ainsi obtenu

(30) Priorität: 10.06.1992 DE 4218926
(43) Veröffentlichungstag der Anmeldung: 09.02.1994
(73) Patentinhaber: ASEA BROWN BOVERI AG, 5400 Baden (CH)
(72) Erfinder: Brändle, Hubert, Dr., CH-8112 Otelfingen (CH); Gribi, Walter, CH-5430 Wettingen (CH); Haffner, Ken-Yves, CH-5400 Baden (CH)
(74) Vertreter: Kaiser, Helmut, Dr.

(56) Entgegenhaltungen:
- EP-A- 0 101 669
- EP-A- 0 119 772

## Beschreibung

### TECHNISCHES GEBIET

Bei der Erfindung wird ausgegangen von einem Verfahren zur Herstellung einer Vorrichtung zur Messung einer Gasdichte, insbesondere des Isoliergases einer gasisolierten elektrischen Anlage, nach dem Oberbegriff von Patentanspruch 1. Die Erfindung betrifft auch nach diesem Verfahren hergestellte Vorrichtungen.

### STAND DER TECHNIK

Ein Verfahren der eingangs genannten Art ist in EP-A-0 484 569 sowie in EP-A-0 101 669 beschrieben. Mit der nach diesem Verfahren hergestellten Vorrichtung kann die Dichte von Schwefelhexafluorid in einer gasisolierten elektrischen Hochspannungsanlage mittels zweier Resonatoren gemessen werden. Beide Resonatoren weisen bei gleichen äusseren Bedingungen, d.h bei einer vorgegebenen Temperatur und gleicher Umgebung, wie insbesondere Vakuum, gleiche Resonanzfrequenzen auf. Einer der beiden Resonatoren dient als Messfühler und ist in einem Schwefelhexafluorid enthaltenden Raum angeordnet. Hierbei ist die gasdichteabhängige Verstimmung seiner Resonanzfrequenz ein Mass für die zu messende Dichte des Schwefelhexafluorids. Ein anderer der beiden Resonatoren ist zu Referenzzwecken vorgesehen und ist vorzugsweise unter Vakuum angeordnet. In einer mit den Ausgangssignalen der beiden Resonatoren beaufschlagten Auswerteelektronik wird ein der Dichte des Schwefelhexafluorids proportionales Messsignal abgegriffen.

Als Resonatoren werden hierbei piezoelektrisch angeregte Stimmgabelquarze eingesetzt. Diese Quarze werden in der Uhrenindustrie bei der Herstellung von Zeitmessern in grossen Stückzahlen aus einem Quarzwafer herausgeschnitten und jeweils mit zwei Goldelektroden beschichtet. Diese Goldelektroden dienen zum einen der piezoelektrischen Anregung des Stimmgabelquarzes mit Hilfe eines elektrischen Schwingkreises. Zum anderen dienen sie aber auch der Abstimmung der einzelnen Stimmgabelquarze auf eine einheitliche Resonanzgrundfrequenz von 32768 Hz bei einer Temperatur von 25°C.

### DARSTELLUNG DER ERFINDUNG

Der Erfindung, wie sie in Patentanspruch 1 definiert ist, liegt die Aufgabe zugrunde, ein Verfahren der eingangs genannten Art schaffen, welches in einfacher und kostengünstiger Weise die Herstellung einer Gasdichtemessvorrichtung hoher Messgenauigkeit ermöglicht. Zugleich ist es auch Aufgabe der Erfindung danach hergestellte Gasdichtemessvorrichtungen besonders hoher Messgenauigkeit anzugeben.

Das erfindungsgemässe Verfahren zeichnet sich dadurch aus, dass es für Massenfertigung hervorragend geeignet ist. Aufwendige Kalibrier- und Anpassarbeiten entfallen weitgehend, da alle für die herzustellenden Gasdichtemessvorrichtungen verwendeten Resonatoren innerhalb eines vorgegebenen Toleranzbereiches einander entsprechende Frequenz-Dichte-Kennlinien aufweisen.

Die erfindungsgemässe Vorrichtung ermöglicht eine hochpräzise Messung der Gasdichte bis zu hohen Werten, beispielsweise von 50 kg/m³ und mehr. Die Dichtemessung ist weitgehend unabhängig von der Temperatur und liefert auch über sehr lange Zeiträume hinweg gleichbleibend exakte Werte. Deswegen ist die Vorrichtung nach der Erfindung mit besonderem Vorteil zur kontinuierlichen Überwachung und zur Diagnostik langzeitig betriebener Anlagen geeignet sowie auch zur Ermittlung von Trends bei gegebenenfalls einsetzenden Gasverlusten. Die Wartung an langzeitig betriebenen Anlagen kann so ökonomischer geplant und ausgeführt werden. Mögliche Fehlerquellen können zudem rechtzeitig lokalisiert und behoben werden. Hierdurch wird die Verfügbarkeit der auf Gasdichte überwachten Anlagen erheblich vergrössert.

Die vorteilhaften Wirkungen der Erfindung beruhen vor allem auf der Erkenntnis, dass durch gezielten Einsatz gleichartig ausgebildeter und gleichartig wirkender Resonatoren unerwünschte Frequenzanomalien praktisch vollständig vermieden werden. Solche Frequenzanomalien treten hingegen auf, wenn etwa - wie bisher üblich - bei der Abstimmung aller durch Massenproduktion erzeugten Resonatoren auf eine einheitliche Resonanzfrequenz mittels eines Lasers ein Teil des zur Anregung der Resonatoren vorgesehenen Elektrodenmaterials entfernt werden muss. Hierdurch erfährt der im Gas angeordnete Resonator neben der erwünschten dichteabhängigen Resonanzverschiebung auch unerwünschte Frequenzverschiebungen, welche von der Temperatur, der Gaszähigkeit und der Wechselwirkung des Resonators mit den bei der Resonanz auftretenden Schallwellen abhängig sind.

### KURZE BESCHREIBUNG DER ZEICHNUNG

Nachfolgend wird die Erfindung anhand von Zeichnungen näher erläutert. Hierbei zeigt:
- Fig.1: eine Aufsicht auf einen Schnitt durch einen Teil einer gasisolierten, gekapselten Schaltanlage mit einer Gasdichte-Messvorrichtung nach der Erfindung,
- Fig.2: ein Blockschaltbild der Messvorrichtung nach Fig.1, und
- Fig.3: eine Aufsicht auf einen Schnitt durch einen Teil eines in der Gasdichte-Messvorrichtung nach Fig.1 enthaltenen Sensorkopfes.

### WEG ZUR AUSFÜHRUNG DER ERFINDUNG

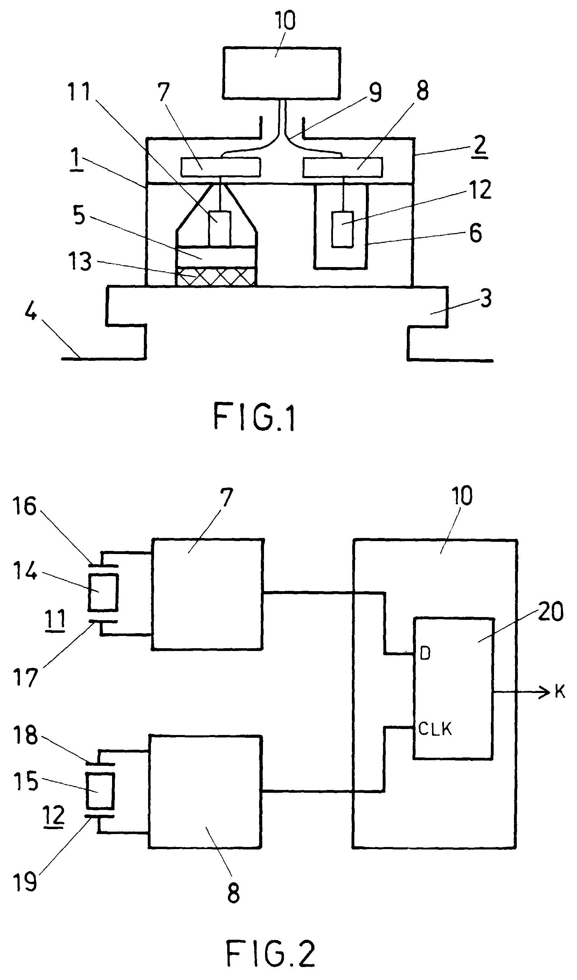

In allen Figuren sind gleichwirkende Teile mit gleichen Bezugszeichen versehen. In Fig.1 bezeichnet 1 eine Gasdichte-Messvorrichtung mit einem Sensorkopf 2. Der Sensorkopf 2 schliesst mittels einer gasdichten Verbindung 3 eine nicht bezeichnete Öffnung einer mit Schwefelhexafluorid (SF₆)-Gas von beispielsweise einigen kg m⁻³ Druck gefüllten Metallkapselung 4 einer etwa als Hochspannungsschaltanlage ausgeführten elektrischen Anlage ab. Der Sensorkopf 2 enthält zwei gasdicht gegeneinander abgeschottete Räume 5 und 6. Die Bezugszeichen 7 und 8 bezeichnen elektrische Schwingkreise. Die Versorgungsenergie der Schwingkreise 7, 8 wird einer nicht dargestellten Stromquelle entnommen. Die Ausgangssignale der Schwingkreise werden über nicht bezeichnete Anschlussleitungen und eine Durchführung 9 an eine Auswertevorrichtung 10 geführt, in der ein die Gasdichte des in der Metallkapselung 4 befindlichen SF₆-Gases angebendes Signal ermittelt und an einen Beobachter und/oder eine Überwachungsvorrichtung ausgegeben wird.

Der Schwingkreise 7 enthält einen im Raum 5 angeordneten und dem SF₆-Gas ausgesetzten Resonator 11, wohingegen im Schwingkreis 8 ein Resonator 12 vorhanden ist, welcher unter Ausschluss der SF₆-Atmosphäre im Raum 6 definierten Druckbedingungen, vorzugsweise Vakuum, ausgesetzt ist. Der Raum 5 ist über eine nicht bezeichnete Öffnung mit dem Inneren der Metallkapselung 4 verbunden. In der Verbindungsöffnung befindet sich eine Filteranordnung 13, welche den Resonator 11 vor mechanischen Beschädigungen schützt und welche zugleich im Inneren der Metallkapselung 4 bei elektrischen Entladungen gebildete Zersetzungsprodukte des SF₆-Gases adsorbiert, unzersetztes SF₆-Gas oder gegebenenfalls zusätzlich vorgesehenes anderes Isoliergas, wie etwa Stickstoff, hingegen durchlässt.

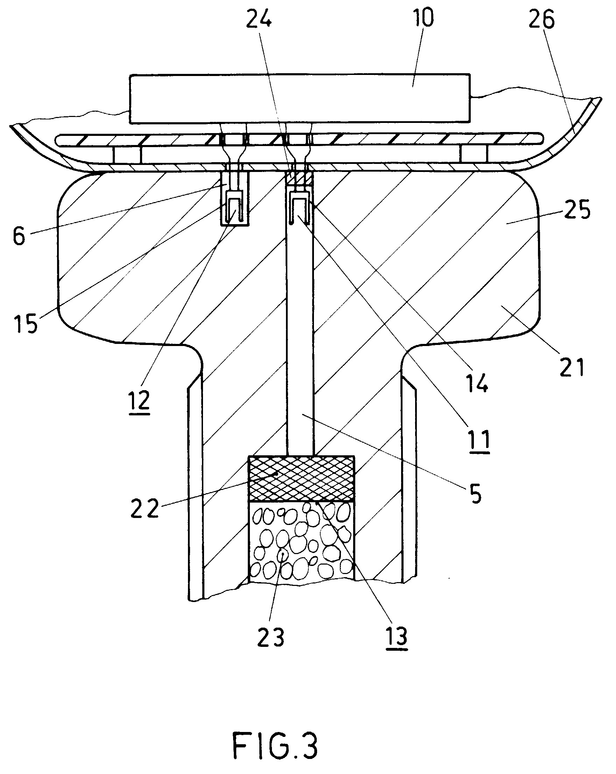

Die Resonatoren 11, 12 werden piezoelektrisch angeregt und weisen innerhalb einer vorgebbaren Frequenztoleranz - von beispielsweise 1 oder 2 Hz - liegende Resonanzfrequenzen auf. Wie aus Fig.2 ersichtlich ist, enthalten die Resonatoren 11, 12 jeweils einen piezoelektrischen Kristall 14, 15 sowie jeweils mindestens zwei auf dem piezoelektrischen Kristall 14, 15 aufgebrachte Elektroden 16, 17, 18, 19. Vorzugsweise handelt es sich bei den piezoelektrischen Kristallen 14, 15 um Stimmgabelquarze, welche jeweils durch eine an ihren Elektroden 16, 17, 18, 19 anliegende Wechselspannung in Schwingungen versetzt werden können. Das umgebende Gas erhöht die effektive Masse des Resonators 11 und führt zu einer dichteabhängigen Resonanzverschiebung. Der Zusammenhang zwischen Dichteänderung und Frequenzverschiebung ist im wesentlichen linear. In SF₆ beträgt diese Verschiebung beispielsweise ca.-4.7 Hz/kg m⁻³.

Die Resonatoren 11, 12 werden aus einer Vielzahl von einander hinsichtlich ihrer physikalischen Eigenschaften und ihrer geometrischen Abmessungen ähnlichen und durch Massenproduktion erzeugten Resonatoren entnommen. Der erste Resonator 11 ist gegenüber der Erzeugung in der Massenproduktion unverändert. Der zweite Resonator 12 ist gegenüber der Erzeugung in der Massenproduktion entweder ebenfalls unverändert und weist innerhalb der vorgegebenen Frequenztoleranz die gleiche Resonanzfrequenz wie der erste Resonator 11 auf. Er kann aber auch durch Veränderung seiner Elektroden 18, 19 derart modifiziert sein, dass er innerhalb der vorgegebenen Frequenztoleranz die gleiche Resonanzfrequenz wie der erste Resonator 11 aufweist. Die Resonanzfrequenzen liegen typischerweise im Bereich von ca. 32,6 kHz.

Die Schwingkreise 7 bzw. 8 sind vorzugsweise jeweils als Rechteckimpulse abgebende Inverterschaltungen ausgeführt. Diese Rechteckimpulse enthalten die Information über die Resonanzfrequenzen der Resonatoren 11 und 12. Sie werden - wie aus Fig. 2 ersichtlich ist - an den D- bzw. an den Takteingang CLK eines in der Auswertevorrichtung 10 enthaltenen D-Flip-Flops 20 geführt. Das D-Flip-Flop 20 bildet durch Korrelation der zugeführten Signale ein der Differenz der Resonanzfrequenzen der Resonatoren 11, 12 entsprechendes und der Gasdichte proportionales Signal k.

Die konstruktive Anordnung der Resonatoren 11, 12 im Sensorkopf 2 ist in Fig.3 angegeben. Der Sensorkopf 2 enthält einen aus wärmeleitendem Werkstoff, wie beispielsweise Messing, hergestellten Montagekörper 21 von rotationssymmetrischer Gestalt mit einer axial und zentral geführten Bohrung. Die Bohrung bildet in ihrem oberen Abschnitt den Raum 5 zur Aufnahme des Resonators 11. In ihrem unteren Abschnitt stellt sie die Verbindung zu dem in der Metallkapselung 4 vorgesehenen SF₆-Gas her und ist dort mit der Filteranordnung 13 ausgefüllt. Die Filteranordnung 13 besteht aus einer porösen Sintermetall-Scheibe 22, welche in der Metallkapselung 4 möglicherweise entstehende Feststoffteilchen vom Raum 5 und damit auch vom Resonator 11 fernhält, und aus einem Adsorptionsfilter 23. Dieses Adsorptionsfilter 23 enthält ein mit Molekularsieb, Aktivtonerde, Natronasbest, Natronkalk oder einer entsprechend wirkenden Substanz gefülltes Rohr.

Während des Betriebes der Hochspannungsschaltanlage aufgrund elektrischer Entladungen und Restfeuchtigkeit entstehende gasförmige Zersetzungsprodukte, wie etwa SF₄, WF₆, SOF₂ und/oder HF, werden von Adsorptionsfilter 23 aufgesaugt. Der Räume 5 und damit auch der Resonator 11 bleiben frei von derartigen unerwünschten, den Resonator 11 in seiner Funktionsweise erheblich beeinträchtigenden Zersetzungsprodukten, während das zu vermessende Gas in sauberer Form in den Raum 5 und damit zum Resonator 11 gelangt.

Der den Resonator 11 aufnehmende Raum 5 ist derart ausgebildet ist, dass akustische Wechselwirkungen mit der Umgebung des Resonators 11 weitgehend vermieden werden. Dies kann einerseits dadurch erreicht werden, dass der Raum 5 gegenüber der Wellenlänge einer vom Resonator 11 bei Resonanzfrequenz ins zu vermessende Gas abgestrahlten Schallwelle gross bemessen ist.

Häufig steht ein derartig grosser Raum nicht zur Verfügung. Es empfiehlt sich dann, den Raum 5 so zu gestalten, dass keine Interferenzen das Nutzsignal stören können. Zu bevorzugen ist eine achsensymmetrische, insbesondere zylindersymmetrische Ausbildung. Der Durchmesser des Raums 5 sollte in diesem Fall kleiner sein als die halbe Wellenlänge einer vom Resonator 11 bei Resonanz(grund)frequenz ins zu vermessende Gas abgestrahlten Schallwelle.

Die akustische Wechselwirkung des als Stimmgabelquarz ausgebildeten Resonators 11 wird zusätzlich verringert, wenn der Stimmgabelquarz mit seiner Stimmgabelachse auf der Achse des ihn aufnehmenden zylinderförmigen Raums 5 angeordnet ist.

Der Raum 5 ist an seinem oberen Ende gasdicht mit einer Durchführung 24 abgeschlossen, welche die elektrischen Anschlüsse der Elektroden des Resonators 11 aus dem Raum 5 in ein die Auswertevorrichtung 10 umschliessendes und auf einem Flansch 25 des Montagekörpers 21 befestigtes Gehäuse 26 führt. Der Resonator 11 wird bevorzugt durch Kleben oder Einpressen der Durchführung 24 in das obere Ende des Raums 5 eingebaut. Die zur Vermeidung akustischer Wechselwirkungen geeignete Länge des Raums 5 ist dann bestimmt durch den Abstand zwischen dem offenen Ende des Raums 5 und den freischwingenden Enden der Quarzstimmgabel des Resonators 11.

Der den zu Vergleichszwecken vorgesehenen Resonator 12 aufnehmende Raum 6 ist als Blindbohrung ausgeführt und ist eng benachbart zum Raum 5 im Montagekörper 21 angeordnet. Durch die örtliche Nähe der beiden Resonatoren 11, 12 sowie durch die gute Wärmeleitung des Montagekörpers 21, des Schwefelhexafluorides und eines gegebenenfalls eingesetzten Wärmeleitfetts werden die beiden Resonatoren 11, 12 auf gleicher Temperatur gehalten. Dadurch und da beide Resonatoren 11, 12 innerhalb eines vorgegebenen Toleranzbereiches übereinstimmende geometrische Abmessungen und übereinstimmende pysikalische Eigenschaften aufweisen, werden temperaturbedingte Resonanzfrequenzänderungen innerhalb der vorgegebenen Frequenztoleranz kompensiert.

Die beiden Resonatoren 11, 12 werden vor dem Einbau in den Sensorkopf 2 aus einer Vielzahl von Resonatoren ausgewählt, die hinsichtlich ihrer physikalischen Eigenschaften und ihrer geometrischen Abmessungen einander ähnlich sind. Zu diesem Zweck werden deren Resonanzfrequenzen unter gleichen Messbedingungen ermittelt und dasjenige Paar von Resonatoren ausgewählt, dessen Resonanzfrequenzen innerhalb der vorgegebenen, von der zu erreichenden Messempfindlichkeit abhängigen Frequenztoleranz liegen. Weitere Paare von Resonatoren mit übereinstimmenden Resonanzfrequenzen werden aus der Vielzahl der bei der Auswahl zur Verfügung stehenden Resonatoren zum Einbau in weitere Gasdichte-Messvorrichtungen nach der Erfindung ausgesondert.

Bevorzugt werden die in den Resonatoren 11, 12 vorgesehenen piezoelektrischen Kristalle 14, 15 sowie alle übrigen in der Vielzahl von ähnlichen Resonatoren vorgesehenen Kristalle aus einem einzigen der Dicke der Stimmgabel (beispielsweise 125 µm) entsprechenden Quarzwafer hergestellt. Die erforderliche Übereinstimmung der geometrischen Abmessungen und der physikalischen Eigenschaften wird dann mit besonders grosser Sicherheit erreicht. Aus einem einzigen Quarzwafer können mehrere 100 Stimmgabelquarze hergestellt werden. Die statistische Streuung der Resonanzfrequenzen der aus diesen Stimmgabelquarzen hergestellten Oszillatoren beträgt ±150 Hz. Aus dem gleichen Wafer hergestellte Resonatoren weisen den grossen Vorteil auf, dass sie einen nahezu identischen Temperaturgang der Resonanzfrequenz aufweisen.

Neben der Auswahl geeignet ausgebildeter Paare von Resonatoren kann mit Vorteil eine erfindungsgemässe Gasdichte-Messvorrichtung auch dadurch erreicht werden, dass aus einer Vielzahl von Resonatoren mit einander hinsichtlich ihrer Materialeigenschaften entsprechenden piezoelektrischen Kristallen 14, 15 ein beliebiges Paar von Resonatoren entnommen wird, und dass der als Referenz dienende, - vorzugsweise unter Vakuum angeordnete Resonator - durch, insbesondere materialabhebende, Bearbeitung derart verändert wird, dass seine Resonanzfrequenz innerhalb der vorgegebenen Frequenztoleranz mit der Resonanzfrequenz des im Gas angeordneten Resonators übereinstimmt.

Die Elektroden des dem Gas ausgesetzten Resonators 11 dürfen nach dem Aufbringen auf den piezoelektrischen Kristall 14 nicht mehr verändert werden. Nur so ist mit Sicherheit gewährleistet, dass der Resonator 11 die neben der erwünschten dichteabhängigen Resonanzverschiebung auftretenden unerwünschten Frequenzanomalien, welche von der Temperatur, der Gaszähigkeit und der Wechselwirkung des Resonators 11 mit den bei der Resonanz auftretenden Schallwellen abhängig sind, kompensiert.

Die Erfindung dient nicht nur der Messung der Dichte des Isoliergases von elektrischen Anlagen. Sie kann überall dort mit Vorteil zur Messung der Dichte von Gasen eingesetzt werden, wo die Dichte des Gases über einen grossen Zeitraum mit guter Genauigkeit gemessen und überwacht wird.

### BEZEICHNUNGSLISTE

- 1: Gasdichte-Messvorrichtung
- 2: Sensorkopf
- 3: gasdichte Verbindung
- 4: Metallkapselung
- 5, 6: Räume
- 7, 8: Schwingkreise
- 9: Durchführung
- 10: Auswertevorrichtung
- 11, 12: Resonatoren
- 13: Filteranordnung
- 14, 15: piezoelektrische Kristalle
- 16, 17, 18, 19: Elektroden
- 20: D-Flip-Flop
- 21: Montagekörper
- 22: Sintermetall-Scheibe
- 23: Adsorptionsfilter
- 24: Durchführung
- 25: Flansch
- 26: Gehäuse

## Patentansprüche

1. Verfahren zur Herstellung einer Vorrichtung zur Messung der Dichte eines Gases, insbesondere des Isoliergases einer gasisolierten elektrischen Anlage, mit zwei jeweils einen piezoelektrischen Kristall (14, 15) und jeweils mindestens zwei auf dem Kristall aufgebrachte Elektroden (16, 17, 18, 19) enthaltenden Resonatoren (11, 12), von welchen beiden Resonatoren (11, 12) ein erster (11) in einem zu vermessendes Gas enthaltenden ersten Raum (5) und ein zweiter (12) in einem gegenüber dem Gas abgeschlossenen zweiten Raum (6) eingebaut ist, dadurch gekennzeichnet, dass vor dem Einbau der beiden Resonatoren (11, 12) folgende Verfahrensschritte ausgeführt werden:
- es werden die Resonanzfrequenzen einer Vielzahl von gleichartigen, durch Massenproduktion erzeugten, keinem Frequenzabgleich unterzogenen und einander hinsichtlich ihrer physikalischen Eigenschaften und ihrer geometrischen Abmessungen ähnlichen Resonatoren unter gleichen Messbedingungen ermittelt, und
- es wird aus diesen Resonatoren ein den ersten (11) und den zweiten Resonator (12) enthaltendes Paar von Resonatoren mit innerhalb einer vorgegebenen Frequenztoleranz übereinstimmenden Resonanzfrequenzen ausgewählt, oder
- es wird aus diesen Resonatoren ein beliebiges, den ersten (11) und den zweiten Resonator (12) enthaltendes Paar von Resonatoren entnommen, und es wird der zweite Resonator (12) durch Bearbeitung seiner Elektroden (18, 19) derart verändert, dass seine Resonanzfrequenz innerhalb der vorgegebenen Frequenztoleranz mit der Resonanzfrequenz des ersten Resonators (11) übereinstimmt.

2. Verfahren nach Anspruch 1, dadurch gekennzeichnet, dass die beim zweiten Resonator (12) vorgesehenen Elektroden (18, 19) nach ihrem Aufbringen auf den piezoelektrischen Kristall (15) bei der Abstimmung der Resonanzfrequenz materialabhebend bearbeitet werden.

3. Verfahren nach einem der Ansprüche 1 oder 2, dadurch gekennzeichnet, dass die piezoelektrischen Kristalle der Resonatoren aus einem einzigen Kristallwafer herausgearbeitet werden.

4. Verfahren nach einem der Ansprüche 1 bis 3, dadurch gekennzeichnet, dass die beiden Resonatoren (11, 12) benachbart in einen gut wärmeleitenden Montagekörper (21) eingebaut werden.

5. Verfahren nach Anspruch 4, dadurch gekennzeichnet, dass der Einbau durch gasdichtes Kleben oder Einpressen ausgeführt wird.

6. Vorrichtung hergestellt nach dem Verfahren gemäss Anspruch 1, dadurch gekennzeichnet, dass der erste Raum (5) gegenüber der Wellenlänge einer vom ersten Resonator (11) bei Resonanzfrequenz ins zu vermessende Gas abgestrahlten Schallwelle gross bemessen ist.

7. Vorrichtung hergestellt nach dem Verfahren gemäss Anspruch 1, dadurch gekennzeichnet, dass der erste Raum (5) zylinderförmig ausgebildet ist und einen Durchmesser aufweist, welcher kleiner ist als die halbe Wellenlänge einer vom ersten Resonator (11) bei Resonanzfrequenz ins zu vermessende Gas abgestrahlten Schallwelle.

## Claims

1. Method for producing a device for measuring the density of a gas, in particular of the insulating gas of a gas-insulated electrical installation, comprising two resonators (11, 12) each containing a piezoelectric crystal (14, 15) and each containing at least two electrodes (16, 17, 18, 19) applied to the crystal, of which two resonators (11, 12) a first (11) is mounted in a first chamber (5) containing gas to be measured and a second (12) is mounted in a second chamber (6) sealed with respect to the gas, characterized in that, prior to mounting the two resonators (11, 12), the following method steps are carried out:
- the resonance frequencies of a multiplicity of similar resonators which are manufactured by mass production and which are not subjected to a frequency alignment and are similar to one another in respect of their physical properties and their geometrical dimensions, are determined under identical measuring conditions, and a pair of resonators containing the first (11) and the second resonator (12) are selected from these resonators with resonance frequencies which are matched within a specified frequency tolerance, or any desired pair of resonators containing the first (11) and the second resonator (12) is drawn from said resonators, and the second resonator (12) is altered in such a way by machining its electrodes (18, 19) that its resonance frequency matches the resonance frequency of the first resonator (11) within the specified frequency tolerance.

2. Method according to Claim 1, characterized in that the electrodes (18, 19) provided in the case of the second resonator (12) are machined by material removal after being applied to the piezoelectric crystal (15) during the tuning of the resonance frequency.

3. Method according to one of Claims 1 or 2, characterized in that the piezoelectric crystals of the resonators are machined out of a single crystal wafer.

4. Method according to one of Claims 1 to 3, characterized in that the two resonators (11, 12) are adjacently mounted in a mounting body (21) with good thermal conductivity.

5. Method according to Claim 4, characterized in that the mounting is performed by gastight gluing or pressing-in.

6. Device produced according to the method according to Claim 1, characterized in that the first chamber (5) is made large compared with the wavelength of a sound wave radiated by the first resonator (11) into the gas to be measured at resonance frequency.

7. Device produced according to the method according to Claim 1, characterized in that the first chamber (5) is of cylindrical construction and has a diameter which is less than half the wavelength of a sound wave radiated by the first resonator (11) into the gas to be measured at resonance frequency.

## Revendications

1. Procédé de production d'un appareil pour la mesure de la densité d'un gaz, en particulier du gaz d'isolation d'une installation électrique isolée par du gaz, avec deux résonateurs (11, 12) un cristal piézo-électrique (14, 15) et contenant chacun au moins deux électrodes (16, 17, 18, 19) appliquées sur le cristal, parmi lesquels deux le premier (11) étant monté dans un premier volume (5) contenant un gaz à mesurer et le second (12) étant monté dans un second volume (6) isolé vis-à-vis du gaz, caractérisé en ce que les étapes suivantes du procédé doivent être exécutées avant le montage des deux résonateurs (11, 12) :
- on détermine les fréquences de résonance, dans des conditions de mesure identiques, d'un grand nombre de résonateurs similaires, fabriqués par une production en série, ne nécessitant pas d'ajustage de fréquence et similaires entre eux du point de vue de leurs caractéristiques physiques et de leurs dimensions géométriques, et
- on choisit parmi ces résonateurs, une paire de résonateurs comprenant le premier résonateur (11) et le second résonateur (12) avec des fréquences de résonance concordantes à l'intérieur d'une tolérance en fréquence donnée, ou
- on prélève parmi ces résonateurs une paire quelconque de résonateurs comprenant le premier résonateur (11) et le second résonateur (12), et on modifie le second résonateur (12) par usinage de ses électrodes (18, 19) de telle sorte que sa fréquence de résonance concorde avec la fréquence de résonance du premier résonateur (11) à l'intérieur de la tolérance en fréquence donnée.

2. Procédé selon la revendication 1, caractérisé en ce que les électrodes (18, 19) prévues sur le second résonateur (12) sont usinées par enlèvement de matière lors de l'accord de la fréquence de résonance après leur application sur le cristal piézo-électrique (15).

3. Procédé selon l'une quelconque des revendications 1 ou 2, caractérisé en ce que les cristaux piézo-électriques des résonateurs sont fabriqués à partir d'une plaquette unique de cristaux.

4. Procédé selon l'une quelconque des revendications 1 à 3, caractérisé en ce que les deux résonateurs (11, 12) sont montés au voisinage l'un de l'autre dans un carter de montage (21) bon conducteur de la chaleur.

5. Procédé selon la revendication 4, caractérisé en ce que le montage est réalisé par pression ou par collage étanche au gaz.

6. Appareil fabriqué selon le procédé conforme à la revendication 1, caractérisé en ce que le premier volume (5) a une grande dimension par rapport à la longueur d'onde d'une onde acoustique émise dans le gaz à mesurer par le premier résonateur (11) à la fréquence de résonance.

7. Appareil fabriqué selon le procédé conforme à la revendication 1, caractérisé en ce que le premier volume (5) a une forme cylindrique et présente un diamètre qui est inférieur à la demi-longueur d'onde d'une onde acoustique émise par le premier résonateur (11) à la fréquence de résonance dans le gaz à mesurer.
